# EUROPEAN PATENT APPLICATION

(11) **EP 2 078 855 A1**
(43) Date of publication of application: **15.07.2009**
(21) Application number: 08075022.7
(22) Date of filing: 09.01.2008
(51) Int. Cl.: F03D 11/00, F01D 25/16, F16C 27/00, H02K 5/16

(54) **A supporting ring for mounting a bearing or bearing parts in a gear unit**

(71) Applicant: Gamesa Innovation & Technology, S.L., 31621 Sarriguren, Pamplona (ES); HANSEN TRANSMISSIONS INTERNATIONAL, naamloze vennootschap, 2650 Edegem (BE)
(72) Inventor: Saenz de Ugarte, Patrik, 31013 Pamplona (Navarra) (ES); Barañano Etxebarria, Javier, 31013 Pamplona (Navarra) (ES); Derkinderen, Wim, 2540 Hove (BE)
(74) Representative: Donné, Eddy

(57) **Abstract**

A supporting ring for mounting a bearing or bearing parts in a gear unit, **characterized in that** it is relatively stiff in a radial direction, but relatively flexible in the axial direction.

## Description

The present invention relates to a supporting ring for mounting a bearing or bearing parts in a gear unit.

More specifically but not exclusively, the present invention relates to such a supporting ring for application in a wind turbine, typically for mounting the bearing of the second planet carrier of a double stage planetary gear unit connecting the rotor hub of the wind turbine to a generator.

Different ways of locating a bearing in a housing or on a shaft are known, depending on the type of bearing (cylindrical bearing, taper roller bearing, spherical bearing, etc ...) and on the type of location that is wanted.

In general, the bearing is located by preventing the movement of the outer bearing ring and/or the inner bearing ring. Typical examples are: the fixing of an inner bearing ring on a shaft through a shrinking process, the bolting of the outer ring to the housing, the use of nuts and split pins to prevent the movement of one of the rings, etc...

Common for all these types of mounting is that a firm connection or a good contact for the transfer of forces is obtained between the outer ring and the static housing on the one hand, and/or the inner ring and the rotating part, for example a shaft, on the other hand.

In this manner, the loads acting on the rotating part can be easily transferred to the housing, as for example loads due to the weight, but also dynamic loads.

However, in the present context of applications with growing dimensions, the loads which bearings are supposed to withstand are increasing rapidly, which leads to unacceptable wear, plastic deformation or premature failure of the bearing rings, the supporting structure, etc....

For example, in a classical design of a wind turbine, the rotor hub is supported by a couple of bearings or occasionally by one main bearing. This rotor hub is connected to a gear box, typically having one or more planetary stages, in which the slow rotation of the rotor blades is transformed in a fast rotation at the output of the gearbox, the output being connected to a power generator.

Hereby the planet carrier of the first planetary gear stage is normally connected to the rotor hub, the planet carrier being supported by its own bearing or pair of bearings.

In order to minimize the overall weight of the wind turbine, the more recent designs of wind turbines try to integrate different components of the drive train.

One way of integrating parts is to use one main bearing or a pair of bearings which supports the planet carrier as well as the rotor hub, whereby on this rotor hub in the newest designs rotor blades can be mounted with a length of 70 m.

It is clear that such one main bearing or pair of bearings as well as the whole structure supporting the bearing(s), are put under extremely high loads.

Hereby it is unavoidable that certain deformations and deviations occur during the rotation of the rotor blades.

Furthermore, in the new designs often at least two planetary gear stages are used. Usually the planet carrier of the first planetary gear stage is supported through connection to the rotor hub without any additional bearing.

The output shaft of the first planetary gear stage is held centrally through the interaction of the sun wheel with the planet wheels of the first planetary gear stage also without any additional direct bearing.

Additionally this output shaft of the first planetary gear stage is connected to the planet carrier of the second planet planetary gear stage, so that it is supported at both sides without any additional direct bearing support.

However, the planet carrier of the second planetary stage is mounted rotatably with regard to the housing structure by means of a bearing, which bearing is therefore supporting also indirectly the output shaft of the first planetary gear stage.

Finally, the output shaft of the second planetary gear stage is connected to a generator, whereby this output shaft is typically mounted rotatably in the generator housing by means of a bearing.

It is clear that the forces, as well as the deformations and deviations on the rotor hub will be transmitted through the two planetary gear stages, resulting in extreme loads on the above-mentioned bearing supporting the planet carrier of the second planetary gear stage.
The classical way of mounting of this bearing in the housing is not suitable to cope with these extreme loads.

That is the reason why there is a need for a special supporting ring, which is the subject of the present invention.

It is important to notice that the axial component of the load on the bearing is often the cause of problems like the failure and plastic deformation of the bearing or the supporting structures.

So, the present invention aims at a supporting ring for mounting a bearing or bearing parts in a gear unit which is suitable for applications with very high loads, especially also in the axial direction, in which the presently known supports or methods of locating a bearing fail or are not sufficiently adequate.

Hereby, it is an additional objective of the present invention to obtain a supporting ring that can be produced cost effectively and without the need for many technically sophisticated manipulations.

To this aim, the invention relates to a supporting ring for mounting a bearing or bearing parts in a gear unit, which is relatively stiff in a radial direction, but relatively flexible in the axial direction.

A first important advantage of such a supporting ring according to the present invention is its property to be relatively flexible in the axial direction.

This means that the supporting ring is capable of undergoing a deformation in the axial direction under very high axial loads. In this manner, failure of the support of the bearing is avoided, while a classical support which is normally very rigid would fail or would cause damage to the bearing it supports.

Another important advantage of a supporting ring in accordance with the present invention is its property to be relatively stiff in the radial direction.

In this way, it is assured that the bearing is kept centralized around the central axis of rotation, since the bearing is held by the supporting ring in the housing, which ring by its radial stiffness will not allow a considerable displacement in a radial direction.

As a consequence, also the rotating parts, for example a rotor hub and its gears, will be kept centralized since these parts are on their turn held by the bearing.

According to a preferred embodiment of a supporting ring in accordance with the present invention, the supporting ring comprises an inner part and an outer part, respectively at the radial inner side and at the radial outer side of the supporting ring, which are connected to each other through an intermediate part which is relatively flexible in the axial direction compared to the axial stiffness of the inner and outer part.

An advantage of this embodiment of a supporting ring according to the present invention is that the part which is relatively flexible in the axial direction is concentrated in the intermediate part.

Indeed, the outer part and the inner part are preferably relatively stiff, since these parts are used, respectively to connect the supporting ring to the housing and to keep the bearing in the supporting ring.

According to an even more preferred embodiment of supporting ring in accordance with the present invention, the inner, the outer and the intermediate part or a part of them are substantially ring shaped.

Preferably, the intermediate part is connected to the inner part and to the outer part, respectively by inner beams and outer beams, the beams being directed in a radial direction.

Additionally, it is preferred that not any of the inner beams is aligned along a same radial as any of the outer beams, whereby preferably each inner beam is lying diametrically with regard to an outer beam and vice versa.

This particular embodiment of a supporting ring in accordance with the present invention has multiple advantages.

Firstly, the use of beams and their particular emplacement provides the necessary flexibility in the axial direction as is required according to the present invention.

Secondly, again the same beams and their particular emplacement give enough stiffness in the radial direction in order to keep the components centralized.

Finally, the shape is suitable to be made as one monolithic piece for example through casting, so that it is easy to produce and not expensive.

With the intention of better showing the characteristics of the invention, hereafter, as an example without any restrictive character whatsoever, a preferred form of embodiment of supporting ring according to the present invention, is represented with reference to the accompanying drawings, wherein:
figure 1 represents a perspective view of a supporting ring in accordance with the present invention;
figure 2 represents a front view of the same supporting ring, indicated by F2 in figure 1;
figure 3 represents a cross-section according to line III-III in figure 2;
figure 4 represents on a bigger scale a cross-section of the supporting ring according to a cut indicated by line IV-IV in figure 2, whereby the mounting of the supporting ring in a housing and of a bearing in the supporting ring is illustrated in dotted lines;
figure 5 represents schematically a typical wind turbine wherein a supporting ring in accordance with the present invention is integrated for supporting the bearing of a planet carrier; and,
figure 6 represents on a bigger scale the cross-section of the part of the wind turbine indicated by F6 in figure 5.

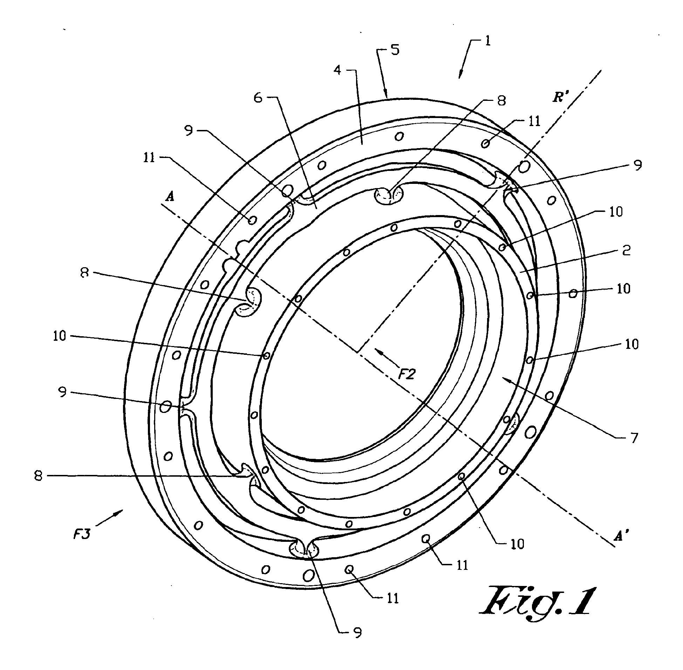

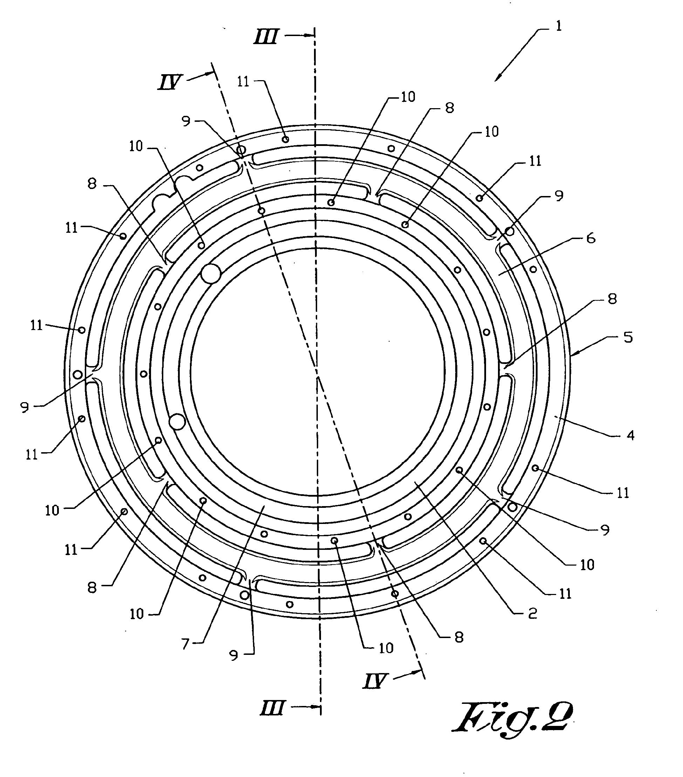

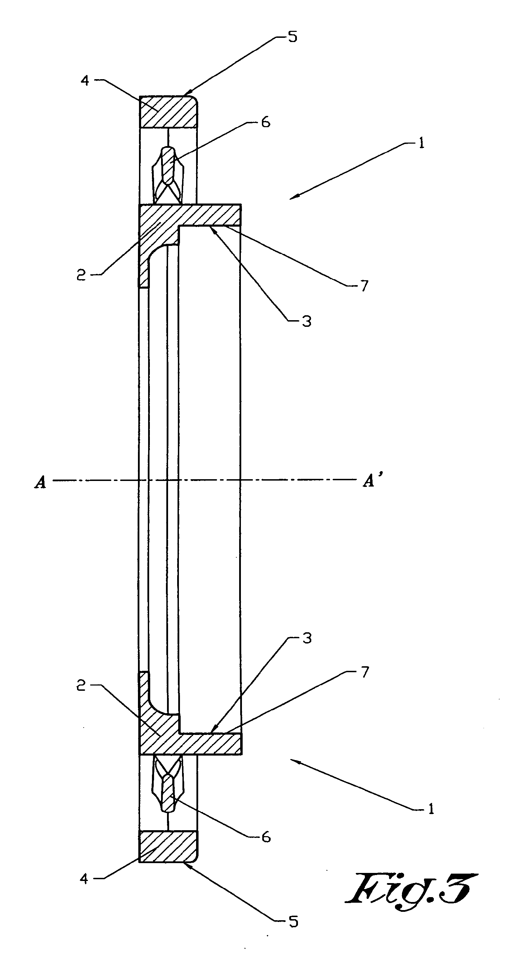

The supporting ring 1 represented in the figures 1 to 4 is made as one monolithic piece.

However, it can be considered as having three parts: an inner part 2 at the radial inner side 3 of the supporting ring 1, an outer part 4 at the radial outer side 5 of the supporting ring 1 and an intermediate part 6 through which the outer part 4 and the inner part 2 are connected to each other.

The inner part 2, the intermediate part 6 and the outer part 4 are all substantially ring shaped and are mounted in a concentric position.

In the embodiment shown in the figures 1 to 4, the inner part 2 is made in the form of a sleeve 7 which is profiled on the inner side in order to be able to receive the bearing or bearing parts to be supported by the supporting ring 1.

The intermediate part 6 is connected to the inner part 2 and to the outer part 4, respectively by inner beams 8 and by outer beams 9.

All these beams 8 and 9 are directed in a radial direction RR'.

However, not any of the inner beams 8 is aligned along a same radial R as any of the outer beams 9.

Actually, in the embodiment represented in the figures 1 to 4, each inner beam 8 is lying diametrically with regard to an outer beam 9 and vice versa.

The inner part 2, as well as the outer part 4, is provided with holes, respectively holes 10 and holes 11.

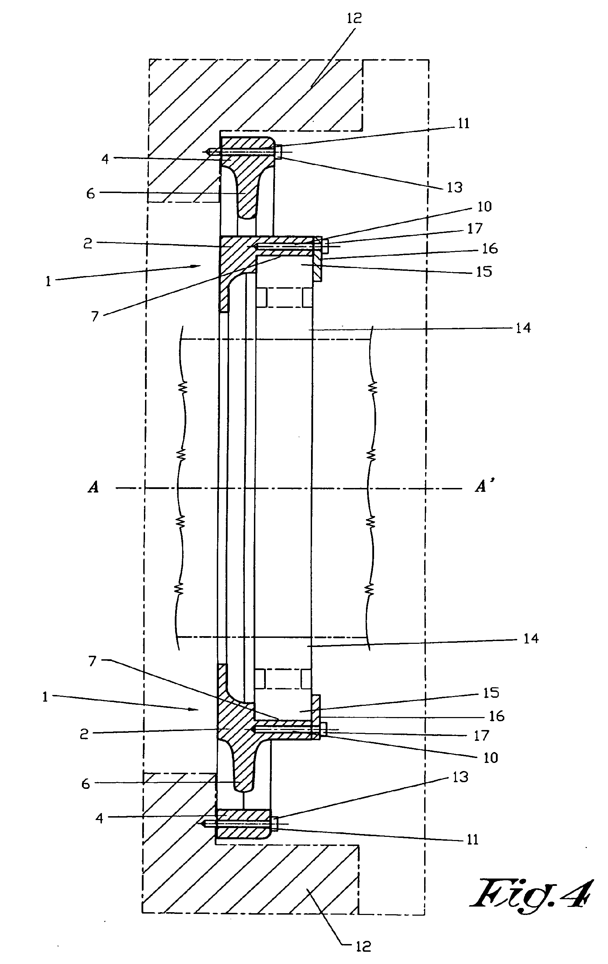

In figure 4 is demonstrated how the supporting ring can be mounted to a housing 12, for example by means of bolts 13 passing through the holes 11.

In the same manner, holes 10 can be used for locating a bearing 14, in this case a cylindrical bearing 14, or a bearing part, like an outer bearing ring 15, in the sleeve 7 by means of a cover plate 16 which is bolted with bolts 17 to the supporting ring 1.

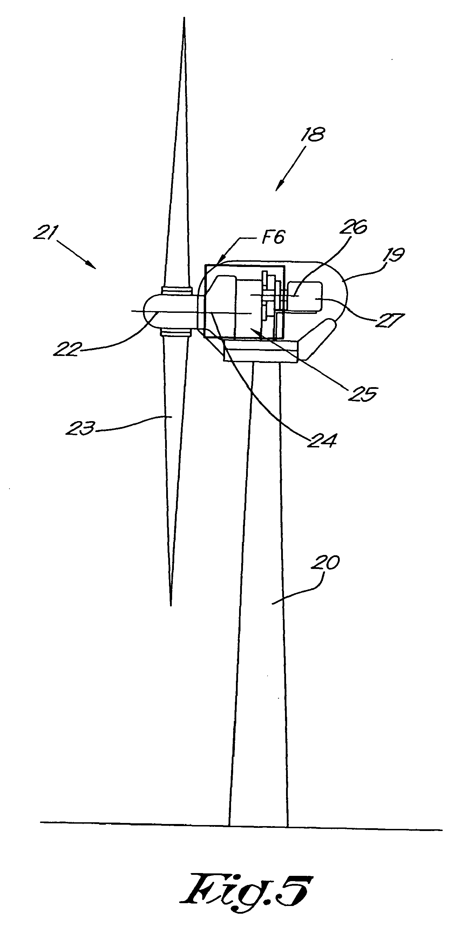

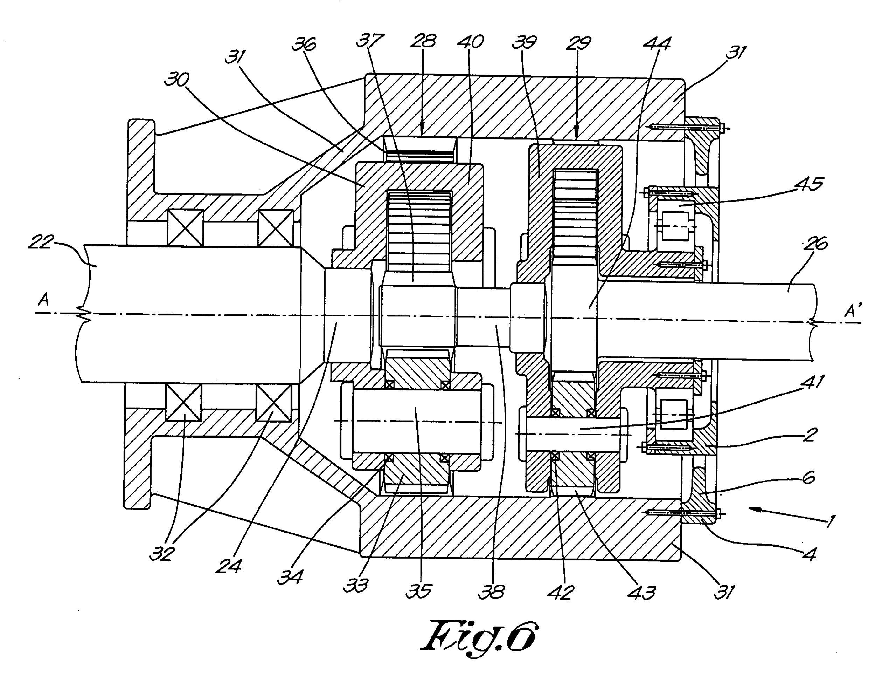

The particular advantages and functioning of a supporting ring 1 in accordance with the present invention will further be illustrated by means of figures 5 and 6.

In these figures 5 and 6 the supporting ring 1 is applied in a wind turbine 18 in order to support the bearing 45 of the second planet carrier 39 of a double stage planetary gear unit connecting the rotor hub 22 of the wind turbine 18 to a generator 27.

In figure 5 a typical wind turbine 18 is represented, which is composed of a nacelle 19 that is mounted rotatably on a static supporting structure 20. In this manner the wind turbine 18 can be oriented to the direction of the wind.

In the nacelle 19 a rotor 21 is mounted consisting of a rotor hub 22 to which the rotor blades 23 are fixed. The rotor hub 22 is connected to the input shaft 24 of a gear unit 25, while the output shaft 26 of the gear unit 25 is connected to an electrical power generator 27.

As represented more in detail in figure 6, the gear unit 25 has two planetary gear stages 28 and 29.

Hereby the planet carrier 30 of the first planetary gear stage 28 plays the role of input shaft 24 and is connected to the rotor hub 22.

Therefore, the planet carrier 30 of the first planetary gear stage 28 is rigidly connected to the rotor hub 22, whereby the combination of rotor hub 22 and planet carrier 30 is mounted in a rotatable manner with regard to the housing 31 by means of a pair of bearings 32.

Furthermore, the first planetary gear stage 28 is provided with planet wheels 33 mounted rotatably by means of planet bearings 34 on planet shafts 35 which are rigidly connected to the planet carrier 30.

These planet wheels 33 interact, on the one hand, with a ring wheel 36 that is rigidly connected to the housing 31, and, on the other hand, with a sun wheel 37 that is mounted on the output shaft 38 of the first planetary gear stage 28.

Hereby the slow rotation of the rotor hub 22 is transformed in a faster rotation at the output shaft 38.

This output shaft 38 of the first planetary gear stage 28 is in its turn used as an input shaft 38 of the second planetary gear stage 29, whereby the input shaft 38 is driving the planet carrier 39 of this second planetary gear stage 29.

In an analogous manner as with the first planetary gear stage 28, the input shaft 38 drives an output shaft 26 through the interaction of planet wheels 40 mounted on planet shafts 41 on planet carrier 39 by means of planet bearings 42, a ring wheel 43 fixedly connected to the housing 31 and a sun wheel 44 mounted on the output shaft 26.

Obviously, the rotation speed obtained at the output shaft 26 of the second planetary gear stage 29 is still more increased than at the output shaft 38 of the first planetary gear stage 28.

In this manner, the output shaft 26 is rotating sufficiently fast to let the electrical power generator 27 function properly.

The planet carrier 39 of the second planetary gear stage 29 is provided with a bearing 45, which is mounted, completely in an analogous manner as in the example of figure 4, in a supporting ring 1 in accordance with the present invention, the supporting ring 1 being connected to the housing 31.

According to the invention, the intermediate part 6 of the supporting ring 1, with its inner beams 8 and outer beams 9, plays an important role.

Indeed, this intermediate part 6 is more flexible in an axial direction AA' then the inner part 2 and the outer part 4.

Axial load on the rotor hub 22 is transmitted through the two planetary gear stages 28 and 29 to the bearing 45 and further through the supporting ring 1 to the housing 31.

As a consequence, this axial load will result in a deformation of the intermediate part 6 of the supporting ring 1 in the axial direction AA'.

This means the inner part 2 and the outer part 4 will undergo an axial displacement with regard to one another.

In a classic mounting of a bearing this would not be possible to realize, the bearing 45 being brought in contact with an abutment or the like which is very rigid.

Therefore, in a classic mounting of the bearing 45, the loads in the axial direction which the bearing 45 must necessarily withstand, are much bigger. That is also why in that case the bearing tends to fail.

The fact that a certain displacement is allowed in the axial direction AA' by using a supporting ring 1 reduces the loads on the bearing 45. However, during the design of the wind turbine 18, this degree of freedom has to be taken into account.

Another important feature of the intermediate part 6, with its inner beams 8 and outer beams 9, is that it has as relatively high stiffness in a radial direction RR'.

This means that loads in a radial direction RR' do not result in a considerable deformation, so that the bearing 45 is kept centralized around the axis of rotation AA'.

This is another advantage of a supporting ring 1 in accordance with the present invention.

According to a preferred embodiment of the present invention, the supporting ring 1 is cast as one monolithic piece.

This embodiment of the invention has the advantage that the production is very much simplified. Indeed, once the mold has been fabricated, a lot of pieces can be made very quickly, easily and less expensive.

According to a still more preferred embodiment of a supporting ring 1 in accordance with the present invention, it is made of a ductile cast iron, also called nodular cast iron.

Classical cast iron is rather brittle. This is caused by the high content of carbon in it. When the cast solidifies, some of this carbon precipitates as graphite flakes, the flakes enhancing the forming of cracks.

In ductile cast iron so called "nodulizers" like magnesium or cerium, are added. These "nodulizers" cause the carbon to precipitate as graphite nodules rather than as flakes, so that the forming of cracks is discouraged and the metal is more ductile.

The advantage of the use of ductile cast iron is that a stronger monolithic piece is obtained, having a good toughness and wear resistance, as well as a rather limited weight compared to its strength.

In order to enhance the properties of the supporting ring 1 even more, it is additionally preferred, according to the invention, to use an austempered ductile iron, also known as ADI.

An austempered ductile iron is obtained through casting as a normal ductile cast iron, whereby it is subsequently subjected to an austempering process, which ameliorates considerably its mechanical properties, like tensile strength, yield strength, fatigue strength, impact resistance, hardness, etc....

Hereby the cast metal is first brought quickly to a temperature of about 900 to 950 °C. At this temperature a stable solid solution of iron and carbon is obtained, the so-called γ-phase iron or austenite.

After a few hours the metal is then suddenly cooled (quenched) to a temperature of between 220 and 450°C, where an isothermal process is started during which residual stresses within the material are relieved and some recrystallisaton is allowed, so that the ductility increases with a minimal loss in strength.

According to the most preferred embodiment of supporting ring 1 in accordance with the present invention, it is made of an austempered ductile iron, with a tensile strength of minimum 1000 MPa, also known according to the Ferrocast ADI norm as F-ADI 1000 or, according to the European norm DIN EN 15 64, as EN-GJS-1000-5.

The present invention is in no way limited to the embodiments described above and represented in the drawings, but such a supporting ring for mounting a bearing or bearing parts may be realised in different shapes and dimensions, without departure from the scope of the invention.

## Claims

1. A supporting ring (1) for mounting a bearing (14, 45) or bearing parts (15) in a gear unit (25), **characterized in that** it is relatively stiff in a radial direction (RR'), but relatively flexible in the axial direction (AA').

2. Supporting ring (1) according to claim 1, **characterized in that** it comprises an inner part (2) and an outer part (4), respectively at the radial inner side (3) and at the radial outer side (5) of the supporting ring (1), which are connected to each other through an intermediate part (6) which is relatively flexible in the axial direction (AA') compared to the axial stiffness of the inner part (2) and outer part (4).

3. Supporting ring (1) according to claim 2, **characterized in that** the inner and outer parts (2,4) or a part of it are substantially ring shaped.

4. Supporting ring (1) according to claim 2 or 3,
**characterized in that** the intermediate part (6) is substantially ring shaped.

5. Supporting ring (1) according to any of claims 2 to 4, **characterized in that** the intermediate part (6) is connected to the inner part (2) and to the outer part (4), respectively by inner beams (8) and outer beams (9).

6. Supporting ring (1) according to claim 5, **characterized in that** the beams (8,9) are directed in a radial direction (RR').

7. Supporting ring (1) according to claims 5 and 6, **characterized in that** not any of the inner beams (8) is aligned along a same radial (RR') as any of the outer beams (9).

8. Supporting ring (1) according to claim 7, **characterized in that** each inner beam (8) is lying diametrically with regard to an outer beam (9) and vice versa.

9. Supporting ring (1) according to any of the preceding claims, **characterized in that** it is one monolithic piece.

10. Supporting ring (1) according to claim 9, **characterized in that** it is cast.

11. Supporting ring (1) according to claim 10, **characterized in that** it is made of a ductile cast iron, also called nodular cast iron.

12. Supporting ring (1) according to claim 11, **characterized in that** it is made of an austempered ductile iron, also known as ADI.

13. Supporting ring (1) according to claim 12, **characterized in that** it is made of an austempered ductile iron, with a tensile strength of minimum 1000 MPa, also known according to the Ferrocast ADI norm as F-ADI 1000 or, according to the European norm DIN EN 15 64, as EN-GJS-1000-5.

14. Supporting ring according to any of the preceding claims, **characterized in that** it is applied in a gear unit (25) of a wind turbine (18).

15. Supporting ring according to claim 14, **characterized in that** it is applied for the mounting of a bearing (45) of the second planet carrier (39) of a double stage planetary gear unit, connecting the rotor hub (22) of a wind turbine (18) to an electrical power generator (27).

16. Bearing, **characterized in that** it comprises a supporting ring (1) according to any of the previous claims.

## Amended claims

### Amended claims in accordance with Rule 137(2) EPC.

**1.** A supporting ring (1) for mounting a bearing (14, 45) or bearing parts (15) in a gear unit (25), having an inner part at the radial inner side of the supporting ring, which is profiled on the inner side in order to be able to receive the bearing or bearing parts to be supported by the supporting ring, **characterized in that** it is relatively stiff in a radial direction (RR'), but relatively flexible in the axial direction (AA').

**2.** Supporting ring (1) according to claim 1, **characterized in that** it comprises an inner part (2) and an outer part (4), respectively at the radial inner side (3) and at the radial outer side (5) of the supporting ring (1), which are connected to each other through an intermediate part (6) which is relatively flexible in the axial direction (AA') compared to the axial stiffness of the inner part (2) and outer part (4).

**3.** Supporting ring (1) according to claim 2, **characterized in that** the inner and outer parts (2,4) or a part of it are substantially ring shaped.

**4.** Supporting ring (1) according to claim 2 or 3, **characterized in that** the intermediate part (6) is substantially ring shaped.

**5.** Supporting ring (1) according to any of claims 2 to 4, **characterized in that** the intermediate part (6) is connected to the inner part (2) and to the outer part (4), respectively by inner beams (8) and outer beams (9).
